# EUROPEAN PATENT SPECIFICATION

(11) **EP 2 496 526 B1**
(45) Date of publication and mention of the grant of the patent: **30.03.2016**
(21) Application number: 10779836.5
(22) Date of filing: 03.11.2010
(51) Int. Cl.: C02F 1/467, C02F 1/28, B01D 15/02, B01J 20/34, C02F 101/30, C02F 103/42

(54) **ADSORPTION OF CONTAMINANTS FROM LIQUID AND ELECTROCHEMICHAL REGENERATION OF ADSORBENT**
ADSORPTION VON SCHADSTOFFEN AUS EINER FLÜSSIGKEIT UND ELEKTROCHEMISCHE REGENERATION DES ADSORBENS
ADSORPTION DE CONTAMINANTS ISSUS DE LA RÉGÉNÉRATION LIQUIDE ET ÉLECTROCHIMIQUE D'UN ADSORBANT

(30) Priority: 05.11.2009 GB 0919413
(43) Date of publication of application: 12.09.2012
(73) Proprietor: Arvia Technology Limited, Cheshire WA7 4EB (GB)
(72) Inventor: ROBERTS, Edward P. L., Chester CH1 4AD (GB); BROWN, Nigel Willis, Stoke-on-Trent ST7 2PW (GB); HUSSAIN, Syed N., Lahore (PK)
(74) Representative: Dauncey, Mark Peter
(86) International application number: PCT/GB2010/002027
(87) International publication number: WO 2011/058298

(56) References cited:
- EP-A1- 1 816 106
- WO-A1-2007/125334
- WO-A1-2009/050485
- JP-A- 5 192 652
- JP-A- H05 192 651
- US-A1- 2003 141 202
- US-A1- 2008 245 739
- ZHOU M H ET AL: "Electrochemical regeneration of activated carbon loaded with p-nitrophenol in a fluidized electrochemical reactor", ELECTROCHIMICA ACTA, ELSEVIER SCIENCE PUBLISHERS, BARKING, GB, vol. 51, no. 21, 1 June 2006 (2006-06-01), pages 4489-4496, XP025168922, ISSN: 0013-4686, DOI: DOI:10.1016/J.ELECTACTA.2005.12.028 [retrieved on 2006-06-01]
- BROWN N W ET AL: "Electrochemical regeneration of a carbon-based adsorbent loaded with crystal violet dye", ELECTROCHIMICA ACTA, ELSEVIER SCIENCE PUBLISHERS, BARKING, GB, vol. 49, no. 20, 30 August 2004 (2004-08-30), pages 3269-3281, XP004510926, ISSN: 0013-4686, DOI: DOI:10.1016/J.ELECTACTA.2004.02.040

## Description

The present invention relates to a method for the treatment of liquids. The invention has particular, but not exclusive application in the treatment of contaminated liquids to remove organic pollutants and kill bacteria, fungus, mold, spores or other micro-organisms present in the liquid.

Chlorine is widely used as a disinfectant in various waters, including drinking, process and swimming pool waters. Its major advantage over alternative disinfection technologies (e.g. ozone, UV) is that it provides residual disinfection capability as it remains dissolved in the water and thereby continues to provide protection against bacteria, fungus, mold, spores and other micro-organisms over a longer period. In addition to its disinfectant properties, chlorine is also a strong oxidising agent and can therefore oxidise any organic pollutants present in contaminated water. These properties have resulted in chlorine being the most widely used disinfectant for aqueous applications.

Traditional dosing regimes to disinfect liquids typically employ chlorine, hypochlorite solutions, chloramine solutions, chlorine dioxide or hydrogen peroxide. Unfortunately, however, many of the traditional disinfectants, in particular chlorine, are very hazardous substances. As an alternative, systems have been developed for producing chlorine or hypochlorite from brine using electrochlorination. In spite of the perceived benefits of such systems, their commercial application to date has been hindered by significantly increased capital cost compared to traditional chlorine dosing regimes.

JP5192652 relates to a method of purifying water by contact with activated carbon and the subsequent electrochemical regeneration of said activated carbon for further purification.

US2008245739 relates to a method of treatment of waste water by contact with adsorbent species and the subsequent regeneration of said adsorbent species by contact with an electrolysed alkaline species.

Zhou M H et al. - "Electrochemical regeneration of activated carbon loaded with p-nitrophenol in a fluidized electrochemical reactor", ELECTROCHEMICA ACTA, ELSEVIER SCIENCE PUBLISHERS, BARKING, GB, vol. 51, no. 21, 1 June 2006, pages 4489-4496 relates to a method of removing contaminants from a contaminated liquid by contact with activated carbon and the subsequent electrochemical regeneration of said activated carbon.

Brown et al. - "Electrochemical regeneration of a carbon-based adsorbent loaded with crystal violet dye", ELECTROCHEMICA ACTA, ELSEVIER SCIENCE PUBLISHERS, BARKING, GB, vol. 49, no. 20, 30 August 2004, pages 3269-3281 relates to the method of removing contaminants from a contaminated liquid by contact with an adsorbent and the subsequent electrochemical regeneration of said adsorbent

An object of the present invention is to obviate or mitigate problems associated with current methods for disinfecting contaminated liquids.

The method is defined by the appended claims. The present invention provides a method for the treatment of a liquid comprising contacting the liquid within a treatment zone with an adsorbent material, passing the adsorbent material to a regeneration zone within the treatment zone after contact with said liquid and electrochemically regenerating the adsorbent material within the regeneration zone, a disinfectant precursor species being provided in the regeneration zone, subjected to electrochemical conversion to generate a disinfectant species within the regeneration zone and adsorbent material and/or liquid within the regeneration zone contacted by said disinfectant species, wherein regeneration of the adsorbent material is effected simultaneously with oxidation of the disinfectant precursor species.

By employing electrochemical treatment within a regeneration zone to regenerate used adsorbent material and to produce disinfectant species in-situ, the present invention provides a simple, convenient and environmentally acceptable method to treat contaminated and infected liquids which avoids many of the disadvantages associated with existing systems. The present invention thus provides a combined method for the decontamination and disinfection of liquids in need of such treatment. While the method according to the present invention is eminently suitable for the combined treatment of contaminated and infected liquids, it will be appreciated that the method can be employed for disinfection alone or decontamination alone, depending upon the level of infectious agents and contaminants present in the liquid to be treated.

Prior to the development of the present invention methods of disinfecting liquids typically required the addition to the liquid of a disinfectant, such as chlorine or a chlorinated oxidising agent, which are generally hazardous to handle and store. By generating the disinfectant species in-situ the need to handle and store these hazardous chemicals is avoided. By way of example, the method according to the present invention facilitates the production of a sufficient quantity of oxidised chloride species to be added to a supply of water to ensure that the water remains potable and in doing so reduces or eliminates the need for conventional chemical biocides.

The term 'oxidised chloride species' is intended to encompass a range of oxidised chloride species including, but not limited to, dissolved chlorine, hypochlorite and hypochlorous acid. It will be appreciated that the particular concentration of such species employed in a particular application will depend upon a range of factors, such as solution temperature and pH, as well as parameters of the process used to generate the species and/or parameters of the subsequent processes in which the species are intended to be used.

Preferably the disinfectant species is generated within the regeneration zone at a first higher concentration and then passed to the treatment zone where it disperses in the liquid to be treated so as to be present in said liquid at a second lower concentration. Generation of disinfectant species within the regeneration zone enables high levels of disinfection to be achieved within the regeneration zone where the disinfectant concentration is highest. Disinfection may be effected by contacting microorganisms, such as bacteria, within liquid present within the regeneration zone and/or microorganisms that have been adsorbed by the adsorbent material and which are not killed as a result of the electrochemical regeneration of the adsorbent material. Further disinfection may also be achieved within the treatment zone by residual disinfectant species which have passed from the regeneration zone to the treatment zone. This leads to another significant advantage of the present invention since it facilitates residual disinfection of liquid after it has left the treatment zone.

Discloses herein is also an apparatus for the treatment of a liquid comprising a treatment reservoir for liquid to be contacted by an adsorbent material; and a regeneration chamber defined between two electrodes which are controllable to simultaneously electrochemically regenerate said adsorbent material following contact with said liquid and electrochemically convert a disinfectant precursor species to generate said disinfectant species within the regeneration zone which can then contact adsorbent material and/or liquid within the regeneration zone, wherein the regeneration chamber is within the treatment reservoir.

In the present invention, electrochemical conversion of the disinfectant precursor preferably comprises electrochemical oxidation. In preferred embodiments of the present invention the disinfectant precursor species comprises chloride ions, more preferably the disinfectant precursor species is a chloride salt and preferably the disinfectant precursor species is sodium chloride, which may be provided in the form of dry salt or as a brine and most preferably the sodium chloride is in the form of a brine. Salt water as the disinfectant precursor may be particularly desirable in coastal areas where salt water is plentiful and could be electrochemically oxidised using the method/apparatus of the present invention to generate any required amount of oxidised chloride species. Electrochemical treatment of such precursor species liberates oxidised chloride species, which represent preferred disinfectant species. The electrochemical production of oxidised chloride species using direct electric current provides a number of benefits over traditional methods, including no-longer requiring on-site storage and handling of hazardous chlorine-based products, since the present invention enables oxidised chloride species to be generated in-situ on demand and in precisely the correct amount, which can, if desired, take Into account existing concentrations of oxidised chloride species within the liquid being treated. The method of the present invention thus preferably involves monitoring the concentration of disinfectant species available to contact liquid to be treated and generating further disinfectant in response to said monitoring detecting that the concentration of available disinfectant species is below a threshold level. Given the advantages associated with generation of disinfectant in-situ on demand it will be appreciated that it is preferred that the further disinfectant species is generated by providing further disinfectant precursor species in the regeneration zone and subjecting said further precursor species to electrochemical oxidation.

Moreover, it will be appreciated that the handling and storage of preferred disinfectant precursors, such as brine, is safe, simple and relatively cheap, which provide the method of the present invention with significant commercial advantages over existing disinfectant methods.

Adsorbent materials suitable for use in the method of the present invention are electrically conducting solid materials capable of convenient separation from the liquid phase. Suitable materials are discussed in more detail below, but preferred adsorbent materials comprise a particulate electrically conductive adsorbent material, such as unexpanded graphite intercalation compounds (GICs) and/or activated carbon. Typical individual GIC particles suitable for use in the present invention have electrical conductivities in excess of 10,000 Ω⁻¹ cm⁻¹. It will be appreciated however that in a bed of particles this will be significantly lower as there will be resistance at the particle/particle boundary. Hence it is desirable to use as large a particle as possible to keep the resistance as low as possible. It will be appreciated however that a large number of different GIC materials have been manufactured and that different materials, having different adsorptive properties, can be selected to suit a particular application of the method of the present invention.

In the preferred embodiment which employs brine or salt water as the disinfectant - precursor species, electro-chlorination is a suitable process because the presence of the brine in the liquid being treated increases the conductivity of the liquid so that the adsorbent regeneration and oxidised chloride species generation processes can be operated at relatively low voltages. Yet further commercial advantages arise from the use of preferred adsorbent materials with relatively high conductivities, which results in the regeneration of the adsorbent and electro-oxidation of the disinfectant precursor being relatively low power processes and enables the amount of precursor used to be determined almost exclusively upon the amount of disinfectant needed, rather than having to add an amount of precursor to produce conductivity within the regeneration zone. Moreover, using high conductivity adsorbents allows the method of the present invention to be used to treat water of any conductivity, including low conductivity water.

Another significant advantage associated with the present invention is that the possible generation of chlorinated by-products by the electrochemical oxidation of organic contaminants within the liquid should not represent a potential hazard if the chlorinated compounds have preferential adsorption onto the particulate adsorbent material and higher adsorptive capacities on the adsorbent material. Hence the method of the present invention will help to prevent the release of chlorinated by-products from the decontaminated and disinfected liquid, which is important from both an environmental and economic standpoint.

The decontamination/disinfection treatment process, the adsorbent material regeneration process and the disinfectant generation process can each be carried out continuously, semi-continuously or on a batch basis. Thus, liquid in need of treatment can be continuously passed through the treatment zone, such as a reservoir, containing appropriate levels of adsorbent and disinfectant, or individual volumes of liquid to be treated can be decontaminated and disinfected as a batch, with the adsorbent material being regenerated and the disinfectant species being generated during treatment of the respective batch or between batch treatments as appropriate. Suitable apparatus for carrying out the process in a continuous, semi-continuous or batch-wise manner is described in International patent publication no.s WO2007/125334 and WO2009/050485.

In a first preferred embodiment of the present invention, contacting of the liquid with the adsorbent material and any residual disinfection occurs during passage of the liquid through the treatment zone containing the adsorbent material and any residual disinfectant species. Used adsorbent material that has already contacted contaminated/infected liquid can be recycled through the regeneration zone, for example in the form of a chamber, which is advantageously located within the treatment reservoir, prior to contacting further liquid in need of treatment. A direct electric current is preferably passed through the adsorbent material as the adsorbent material passes through the regeneration zone to regenerate the adsorbent material. A current of around 0.05 to 1 A may be employed. More preferably a current of around 0.25 to 0.75 A may be employed, and most preferably a current of around 0.5 A may be employed. A current density of around 1 to 20 mA/cm² may be employed. Alternatively, it may be advantageous to use a current density of around 5 to 15 mA/cm², or a current density of around 10 mA/cm².

Electrochemical oxidation of the disinfectant precursor species to generate the disinfectant species is also preferably affected by passage of a direct electric current through a quantity of disinfectant precursor species introduced separately into the regeneration zone. A current of around 0.05 to 1 A, or more preferably a current of around 0.25 to 0.75 A, may be employed. Most preferably a current of around 0.5 A may be employed. A current density of around 1 to 20 mA/cm² may be used. Alternatively, it may be advantageous to use a current density of around 5 to 15 mA/cm², or a current density of around 10 mA/cm².

In a preferred embodiment the current employed to effect regeneration of the adsorbent material has substantially the same magnitude as the current used to oxidise the disinfectant precursor species.

Continuous injection of the disinfectant precursor species into the regeneration zone can occur throughout the treatment process.

It will be appreciated that the quantity of disinfectant precursor species required for a particular application may be admitted to the regeneration zone in a single batch, a plurality of discrete batches over a period of time or continuously over a suitable time period. The total quantity needed will depend upon the level of disinfection required and so may, in some cases, be calculable before treatment has begun or may need to be periodically or continually recalculated throughout the period of time that the liquid is being treated. It may therefore be advantageous to control the rate at which the disinfectant precursor species is admitted to the regeneration zone for electrochemical oxidation so as to generate the disinfectant species at a desired rate to suit a particular application.

It is necessary, when deciding the quantity of disinfectant precursor species required, to also consider the quantity of the oxidised chloride species that react with organic contaminants present in the liquid to be treated. The reacted oxidised chloride species thus no longer provide the required disinfectant effect due to the production of unwanted chlorinated organic species. An additional benefit of the present method over previously patented methods is that said chlorinated organic species are removed by the adsorption process and do not remain in the treated liquid as unwanted contaminants.

The regeneration zone or chamber is defined between two electrodes for coupling to a source of electrical power. In use, a voltage can be applied between the electrodes, either continuously or intermittently, to pass current through the adsorbent material and regenerate it in the manner described in "Electrochemical regeneration of a carbon-based adsorbent loaded with crystal violet dye"; N W Brown, E P L Roberts, A A Garforth and RAW Dryfe; Electrachemica Acta 49 (2004) 3269-3281 and "Atrazine removal using adsorption and electrochemical regeneration"; N W Brown, E P. L Roberts, A Chasiotis, T Cherdron and N Sanghrajka; Water Research 39 (2004) 3067-3074. Contaminated/infected liquids may also be treated within an undivided cell, provided there is no continuous electrical connection between the cathode and anode through the solid conducting adsorbent material. In a continuous or semi-continuous process the flow rate of the adsorbent through the regeneration zone can be determined and controlled to ensure a sufficient dwell time in contact with the recycling adsorbent, while the concentration of the disinfectant species available to contact liquid in need of treatment in the regeneration zone and/or treatment zone can also be monitored and controlled to ensure that sufficient disinfectant is available to liquid flowing through the treatment zone.

Apparatus suitable to carryout the method of the present invention can employ a single regeneration zone, or a plurality of regeneration zones in more substantial equipment as described in detail in International patent publication no.s WO2007/125334 and WO2009/050485.

To aid in the recycling of the adsorbent material it is desirable to provide some means to assist movement of the adsorbent material through the treatment zone to the regeneration zone. It is also preferred that the adsorbent material is physically agitated within the treatment zone to assist distribution of the adsorbent material in the liquid and, in doing so, aid adsorption of contaminants, including microorganisms, such as bacteria, from the liquid. This physical agitation also assists dispersion of the disinfectant species throughout the liquid thereby aiding residual disinfection of the liquid during and/or after contact with the adsorbent. Conveniently, physical agitation of the adsorbent material can be achieved by delivery to the treatment zone of a pressurised fluid, such as air, and/or liquid In need of decontamination and/or disinfection.

In a second preferred embodiment of the present invention, a batch-wise process is carried out such that liquid to be treated within the treatment zone is essentially stationary, save for agitation to aid distribution of the adsorbent material throughout the liquid. Conveniently, the adsorbent material can be removed from the treatment zone for recycling and regeneration, or more preferably, used adsorbent material that has already contacted liquid is regenerated within a regeneration zone within the treatment zone by passing an electric current through the adsorbent material to release from the adsorbent material gaseous products derived from contaminants formerly present in the liquid. Generation of the disinfectant species by electrochemical oxidation of the disinfectant precursor species is also preferably effected within the regeneration zone by passage of an electric current through a quantity of the disinfectant precursor species within the regeneration zone. Electrochemical oxidation of the precursor may be carried out a plurality of times during treatment of the liquid to ensure there is always sufficient disinfectant species present to safely and effectively disinfect the liquid. Electrochemical oxidation of the disinfectant precursor species to generate the disinfectant species and electrochemical regeneration of the adsorbent material occur simultaneously within the regeneration zone such that disinfection is achieved at similar overall cost as compared to the adsorbent regeneration process carried out in WO2007/125334 and WO2009/050485. The cost of the combined electrochemical oxidation / regeneration process according to the present invention may in fact be lower than the regeneration process described in WO2007/125334 and WO2009/050485 in embodiments of the present invention where the disinfectant precursor species increases the conductivity of the medium within which the electrochemical processes are being carried out.

As mentioned above, the level of available, i.e. unused, disinfectant species within the regeneration and/or treatment zones can be continually or periodically monitored during treatment of the liquid, and if the concentration falls below a predetermined minimum level, further disinfectant species can be added to the regeneration and/or treatment zones. This further disinfectant can be any desirable type of disinfectant species and does not necessarily have to be generated in-situ, but it is preferred that any further disinfectant is generated in-situ in this way in view of the commercial and environmental advantages of this method.

As mentioned above, the regeneration zone or chamber is defined between an anode and a cathode for coupling to a source of electrical power. The adsorbent material may be continuously or intermittently regenerated while it passes through the regeneration chamber by the application of an electrical voltage between the electrodes. The cathode is preferably housed in a separate compartment defined by a conductive membrane which enables a catholyte to be pumped through the compartment, whilst protecting the cathode from direct contact with the adsorbent material. If a chloride ion-containing solution (e.g. a dilute salt solution) was used as the catholyte (or as a component of the catholyte) and a conductive membrane is selected which allows chloride ions to pass therethrough then this would represent a relatively simple, cheap and convenient means of both supporting regeneration of the adsorbent material and generation of the disinfectant species. The rate of disinfectant generation could then be controlled at least in part by appropriate adjustment of the pressure within the cathode compartment and/or changing the salt concentration within the compartment.

When a batch-wise process is carried out such that the liquid to be treated is essentially stationary rather than flowing through the treatment zone or reservoir it may be desirable to physically agitate the adsorbent material within the treatment zone to assist distribution of the adsorbent material in the liquid and adsorption of contaminants from the liquid. The physical agitation may be provided in any convenient manner, but is conveniently provided by delivery to the treatment zone of pressurised fluid, e.g. air and/or a quantity of liquid in need of decontamination and/or disinfection.

Adsorbent materials suitable for use in the method of the present invention are electrically conducting solid materials capable of convenient separation from the liquid phase. The material may be used in powder, flake or granular form. Whilst the particle size may not be critical, the optimum size is likely to depend on the adsorbent properties. Generally, the material used and particularly the particle size is a compromise between surface area, electrical conductivity and ease of separation.

Preferred adsorbent materials comprise a particulate electrically conductive adsorbent material, such as unexpanded intercalated graphite and/or activated carbon. A single form of electrically conductive material may be used or multiple component materials comprising a combination of two or more different types of material may be used in which at least one component is electrically conductive. Particularly preferred materials include graphite intercalation compounds (GICs). Preferred GICs include a bi-sulphate intercalated product, which can be formed by chemically or electrochemically treating graphite flakes in oxidising conditions in the presence of sulphuric acid. A preferred GIC is in flake form, and typically has a composition of at least 95% carbon, and a density of around 2.225 g cm⁻³. Flake carbons can be used as the starting materials for producing GICs with significantly lower carbon contents (80% or less). These compounds can also be used, but are likely to result in slightly higher voltages across the electrochemical regeneration zone. Other elements may also be present within the GIC, depending on the initial composition of the flake graphite and the chemicals used to convert the flakes into intercalated form.

In single component adsorbent materials a typical particle size is around 0.25 - 0.75 mm. Significantly larger particle sizes can be employed, such as up to around 5 mm, when multiple component adsorbent materials are employed. Very fine particles (< 50 microns) can be used as the adsorbent material since these can be separated from the liquid phase easily if an organic polymer is used as a flocculent. This organic flocculent can then be destroyed by regeneration. The use of other materials of lower electrical conductivity and density would benefit from larger particles. Typical individual GIC particles suitable for use in the present invention have electrical conductivities in excess of 10,000 Ω⁻¹ cm⁻¹. It will be appreciated however that in a bed of particles this will be significantly lower as there will be resistance at the particle/particle boundary. Hence it is desirable to use as large a particle as possible to keep the resistance as low as possible. However it should also be noted that the surface area is inversely proportional to the particle size and there is a trade off between adsorptive capacity and electrical resistance.

It will be appreciated that a large number of different GIC materials have been manufactured and that different materials, having different adsorptive properties, can be selected to suit a particular application of the method of the present invention.

Three separate mechanisms of disinfection occur during the regeneration stage of the process which, in combination, provide strong disinfection conditions within the electrochemical regeneration chamber. The first is due to the direct electrical disruption of bacteria by the passage of electrical current through the adsorbent when contaminant and bacteria are adsorbed on its surface; the second is the direct chlorination of bacteria by the oxidised chloride species generated from the precursor species; the third is a pH affect caused by an increase in hydrogen ions during the oxidation of adsorbed organics and water. Dilution of the oxidised chloride species into the treatment zone occurs during agitation of the adsorbent species such that a residual quantity of said oxidised chloride species remains in the treated fluid post-treatment, providing a residual disinfection effect.

The present invention will now be exemplified with reference to the following figure in relation to the treatment of swimming pool water.

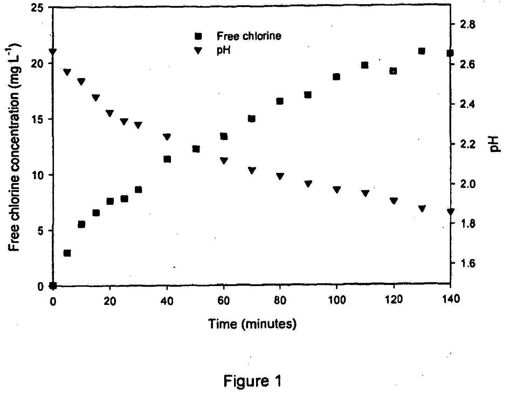

Figure 1 is a graph illustrating the increase in free chlorine and decrease in pH over time of a sample of deionised water subjected to electrochemical oxidation in line with a step in the method of the present invention.

Apparatus suitable to remove contaminants, such as organic pollutants, from swimming pool water using a continuous, semi-continuous or batch process is described in International patent publication no.s WO2007/125334 and WO2009/050485. For the present exemplary embodiment, apparatus similar to that described in WO2007/125334 and WO2009/05048 is employed in which the water to be treated is passed through a treatment zone in the form of a reservoir, within which is provided a regeneration zone in the form of a chamber. The apparatus described in the aforementioned patent applications requires modification to facilitate in-situ generation of oxidised chloride species and disinfection of the swimming pool water as well as decontamination to remove organics, microorganisms and the like. The apparatus requires means by which the disinfectant precursor species, e.g. brine can be added to the regeneration chamber in a sufficient quantity, continuously or as often as necessary, to generate the required amount of disinfectant species, e.g. chlorine/hypochlorite, to provide the desired disinfection level within the regeneration chamber and residual disinfection within the treatment reservoir. The apparatus also requires means to control the current applied to the brine to ensure it is electrochemically converted to oxidised chloride species in the most appropriate manner.

When the apparatus is ready for use, an adsorbent material is loaded into the regeneration chamber in the required amount. Swimming pool water to be treated is then delivered to the treatment reservoir through one or more inlets and filled to a level just below that of one or more discharge outlets from which it can then be returned, after treatment, to the swimming pool or to a separate storage unit. The regeneration chamber and the treatment reservoir are in fluid communication and so upon delivering swimming pool water to be treated into the treatment reservoir, a volume of the water enters the regeneration chamber. An appropriate amount of dry salt or brine is then introduced into the regeneration chamber and a current passed through the brine to generate chlorine gas within the water in the chamber.

Air under pressure is then delivered through openings in the base of the treatment reservoir to generate bubbles in the swimming pool water. This draws particulate adsorbent material and oxidised chloride species generated within the regeneration chamber from below an opening at the bottom of the regeneration chamber, and carries them upward through the treatment reservoir.

As the adsorbent material is carried upwards through the liquid, it adsorbs pollutants, such as organic compounds and bacteria, in the liquid and then passes into the regeneration chamber where a direct electric current is applied to the absorbed organic species to regenerate the adsorbent by anodic oxidation of the absorbent and electrochemical destruction of some of the adsorbed bacteria. The direct electric current also causes oxidation of the brine within the regeneration chamber to generate oxidised chloride species which can then kill bacteria in water within the regeneration chamber as well as bacteria adsorbed on to the adsorbent material.

As the oxidised chloride species disperse throughout the liquid within the regeneration chamber it passes through to the treatment reservoir, typically as a more dilute solution, where it can provide the dual benefit of killing bacteria present within the treatment zone and providing some initial oxidation of any organic contaminants present within the liquid since oxidised chloride species are strong oxidising agents. By controlling the rate of salt addition and the electric current applied to the salt it is possible, if desired, to ensure that sufficient oxidised chloride species remain within the treated liquid to afford a continuing level of disinfection after treatment.

While a generally upward flow of liquid to be treated is preferred, the opposite arrangement can also be used. The direction of flow of liquid through the treatment reservoir will be selected on the basis of the system requirements, but there may be benefit in having the flow of liquid generally opposite to the flow of adsorbent material in the treatment reservoir. That could be case if the general direction of flow of liquid in the reservoir was downwards rather than upwards and the adsorbent material was circulated as described above.

As noted above in a second embodiment, the method may be used for the separate treatment of individual volumes of liquid. In this variant, the treatment reservoir is filled with liquid for treatment to the required level, and then a sufficient quantity of the adsorbent material and oxidised chloride species provided to the treatment reservoir to complete the treatment. The liquid is then removed and a fresh charge of liquid delivered to the reservoir. The adsorbent material will normally be regenerated and recycled during the treatment process, with oxidised chloride species being produced in-situ on demand.

### EXAMPLE

Deionised water (500 ml) was added to an adsorbent material (intercalated graphite material; 120 g) in a simple tank with an electrochemical cell at the base of the tank. The cathode and anode in this cell were divided by a semi-permeable membrane. The adsorbent material was provided on the anode side of the membrane. Sodium chloride was provided as the electrolyte on the cathode side of the membrane.

Air was injected at the base of the electrochemical cell to effect mixing of the adsorbent material with the deionised water.

After mixing a current (0.5 A) was applied to the water / adsorbent mixture and samples of the water then taken at regular intervals.

The applied potential resulted in the transfer of chloride ions across the membrane from the cathode side of the membrane into the anode compartment where they were oxidised to chlorine (Cl₂). Figure 1 illustrates the increase in free chlorine and consequential decrease in pH over time.

## Claims

1. A method for the treatment of a liquid comprising contacting the liquid within a treatment reservoir with an adsorbent material, passing the adsorbent material to a regeneration chamber, defined between two electrodes and within the treatment reservoir, after contact with said liquid and electrochemically regenerating the adsorbent material within the regeneration chamber, a disinfectant precursor species being provided in the regeneration chamber, subjected to electrochemical conversion to generate a disinfectant species within the regeneration chamber and adsorbent material and/or liquid within the regeneration chamber contacted by said disinfectant species, wherein regeneration of the adsorbent material is effected simultaneously with oxidation of the disinfectant precursor species.

2. A method according to claim 1, wherein liquid within the treatment reservoir is contacted by disinfectant species.

3. A method according to claim 1 or 2, wherein the disinfectant species is generated within the regeneration chamber at a first higher concentration and then passed to the treatment reservoir where it disperses in the liquid to be treated so as to be present in said liquid at a second lower concentration.

4. A method according to claim 1, 2 or 3, wherein said electrochemical conversion comprises electrochemical oxidation of said disinfectant precursor species.

5. A method according to any preceding claim, wherein the disinfectant species is chlorine or other oxidised chloride species including hypochlorite and hypochlorous acid.

6. A method according to any preceding claim, wherein the concentration of disinfectant species available to contact liquid is monitored and further disinfectant generated in response to said monitoring detecting that the concentration of available disinfectant species is below a threshold level.

7. A method according to any preceding claim, wherein contacting of the liquid with the adsorbent material and disinfectant species occurs during passage of the liquid through the treatment reservoir.

8. A method according to any preceding claim, wherein adsorbent material that has already contacted liquid is recycled through the regeneration chamber prior to contacting further liquid; an electric current being passed through the adsorbent material as the adsorbent material passes through the regeneration chamber to regenerate the adsorbent material.

9. A method according to claim 8 wherein the current being passed through the adsorbent material is between 0.05 to 1 A.

10. A method according to any preceding claim, wherein electrochemical oxidation of the disinfectant precursor species is effected by passage of an electric current through a quantity of disinfectant precursor species within the regeneration chamber.

11. A method according to claim 10 wherein the current being passed through the quantity of disinfectant precursor species is between 0.05 to 1 A.

12. A method according to claim 10, wherein the current employed to effect regeneration of the adsorbent material has substantially the same magnitude as the current used to oxidise the disinfectant precursor species.

13. A method according to claim any one of claims 10 to 12, wherein said quantity of disinfectant precursor species is admitted to the regeneration chamber for electrochemical oxidation at a rate that is controllable to generate the disinfectant species at a desired rate.

14. A method according to any preceding claim, wherein the adsorbent material comprises unexpanded intercalated graphite.

## Patentansprüche

1. Verfahren zur Behandlung einer Flüssigkeit, umfassend In-Kontakt-Bringen der Flüssigkeit innerhalb eines Behandlungsbehälters mit einem Adsorptionsmaterial, Leiten des Adsorptionsmaterials zu einer Regenerationskammer, definiert zwischen zwei Elektroden und innerhalb des Behandlungsbehälters, nach Kontakt mit der Flüssigkeit und elektrochemisches Regenerieren des Adsorptionsmaterials innerhalb der Regenerationskammer, wobei eine Desinfektionsmittel-Präkursorspezies, in der Regenerationskammer bereitgestellt, elektrochemischer Umwandlung unterzogen wird, um eine Desinfektionsmittelspezies innerhalb der Regenerationskammer zu erzeugen, und wobei Adsorptionsmaterial und/oder Flüssigkeit innerhalb der Regenerationskammer von der Desinfektionsmittelspezies kontaktiert werden, wobei eine Regeneration des Adsorptionsmaterials gleichzeitig mit einer Oxidation der Desinfektionsmittel-Präkursorspezies bewirkt wird.

2. Verfahren nach Anspruch 1, wobei Flüssigkeit innerhalb des Behandlungsbehälters von der Desinfektionsmittelspezies kontaktiert wird.

3. Verfahren nach Anspruch 1 oder 2, wobei die Desinfektionsmittelspezies innerhalb der Regenerationskammer in einer ersten höheren Konzentration erzeugt wird und dann zum Behandlungsbehälter geleitet wird, wo sie sich in der zu behandelnden Flüssigkeit dispergiert, um in der Flüssigkeit in einer zweiten niedrigeren Konzentration vorhanden zu sein.

4. Verfahren nach Anspruch 1, 2 oder 3, wobei die elektrochemische Umwandlung elektrochemische Oxidation der Desinfektionsmittel-Präkursorspezies umfasst.

5. Verfahren nach einem der vorstehenden Ansprüche, wobei die Desinfektionsmittelspezies Chlor oder eine andere oxidierte Chloridspezies einschließlich Hypochlorit und Hypochlorsäure ist.

6. Verfahren nach einem der vorstehenden Ansprüche, wobei die Konzentration der Desinfektionsmittelspezies, die verfügbar ist, um Flüssigkeit zu kontaktieren, überwacht wird und weiteres Desinfektionsmittel erzeugt wird in Reaktion darauf, dass die Überwachung erfasst, dass die Konzentration verfügbarer Desinfektionsmittelspezies unterhalb eines Schwellenniveaus liegt.

7. Verfahren nach einem der vorstehenden Ansprüche, wobei das In-Kontakt-Bringen der Flüssigkeit mit dem Adsorptionsmaterial und der Desinfektionsmittelspezies während des Passierens der Flüssigkeit durch den Behandlungsbehälter erfolgt.

8. Verfahren nach einem der vorstehenden Ansprüche, wobei Adsorptionsmaterial, das bereits Flüssigkeit kontaktiert hat, durch die Regenerationskammer rezykliert wird vor dem Kontaktieren weiterer Flüssigkeit; wobei ein elektrischer Strom, während das Adsorptionsmaterial die Regenerationskammer passiert, durch das Adsorptionsmaterial geleitet wird, um das Adsorptionsmaterial zu regenerieren.

9. Verfahren nach Anspruch 8, wobei der Strom, der durch das Adsorptionsmaterial geleitet wird, zwischen 0,05 bis 1 A liegt.

10. Verfahren nach einem der vorstehenden Ansprüche, wobei elektrochemische Oxidation der Desinfektionsmittel-Präkursorspezies bewirkt wird durch Fließen eines elektrischen Stroms durch eine Menge der Desinfektionsmittel-Präkursorspezies innerhalb der Regenerationskammer.

11. Verfahren nach Anspruch 10, wobei der Strom, der durch die Menge der Desinfektionsmittel-Präkursorspezies geleitet wird, zwischen 0,05 bis 1 A liegt.

12. Verfahren nach Anspruch 10, wobei der Strom, der eingesetzt wird, um Regeneration des Adsorptionsmaterials zu bewirken, im Wesentlichen die gleiche Stärke hat wie der Strom, der eingesetzt wird, um die Desinfektionsmittel-Präkursorspezies zu oxidieren.

13. Verfahren nach einem der Ansprüche 10 bis 12, wobei die Menge der Desinfektionsmittel-Präkursorspezies in die Regenerationskammer zwecks elektrochemischer Oxidation mit einer Rate gelassen wird, die steuer- bzw. regelbar ist, um die Desinfektionsmittelspezies mit einer gewünschten Rate zu erzeugen.

14. Verfahren nach einem der vorstehenden Ansprüche, wobei das Adsorptionsmaterial nicht expandierten interkalierten Graphit umfasst.

## Revendications

1. Procédé permettant le traitement d'un liquide, comprenant les étapes consistant à mettre le liquide présent au sein d'un réservoir de traitement en contact avec une substance adsorbante, faire passer la substance adsorbante dans une chambre de régénération, définie entre deux électrodes et au sein du réservoir de traitement, après contact avec ledit liquide, et régénérer de manière électrochimique la substance adsorbante au sein de la chambre de régénération, une espèce précurseur désinfectante étant fournie dans la chambre de régénération, soumise à une conversion électrochimique afin de générer une espèce désinfectante au sein de la chambre de régénération et la substance adsorbante et/ou le liquide présent(e) au sein de la chambre de génération étant mis(e) en contact avec ladite espèce désinfectante, dans lequel une régénération de la substance adsorbante est mise en oeuvre simultanément à une oxydation de l'espèce précurseur désinfectante.

2. Procédé selon la revendication 1, dans lequel du liquide présent au sein du réservoir du traitement est mis en contact avec l'espèce désinfectante.

3. Procédé selon la revendication 1 ou 2, dans lequel l'espèce désinfectante est générée au sein de la chambre de régénération avec une première concentration plus élevée et passe ensuite dans le réservoir de traitement où elle se disperse dans le liquide à traiter de manière à être présente dans ledit liquide avec une deuxième concentration plus faible.

4. Procédé selon la revendication 1, 2 ou 3, dans lequel ladite conversion électrochimique comprend une oxydation électrochimique de ladite espèce précurseur désinfectante.

5. Procédé selon l'une quelconque des revendications précédentes, dans lequel l'espèce désinfectante est du chlore ou une autre espèce de chlorure oxydé, y compris de l'hypochlorite et de l'acide hypochloreux.

6. Procédé selon l'une quelconque des revendications précédentes, dans lequel la concentration de l'espèce désinfectante disponible pour une mise en contact avec le liquide est surveillée et du désinfectant supplémentaire est généré en réaction à une détection par ladite surveillance que la concentration de l'espèce désinfectante disponible se situe en dessous d'un niveau de seuil.

7. Procédé selon l'une quelconque des revendications précédentes, dans lequel la mise en contact du liquide avec la substance adsorbante et l'espèce désinfectante survient pendant un passage du liquide à travers le réservoir de traitement.

8. Procédé selon l'une quelconque des revendications précédentes, dans lequel la substance adsorbante qui a déjà été mise en contact avec le liquide est recyclée à travers la chambre de régénération préalablement à la mise en contact avec du liquide supplémentaire ; un courant électrique à travers la substance adsorbante lorsque la substance adsorbante traverse la chambre de régénération, afin de régénérer la substance adsorbante.

9. Procédé selon la revendication 8, dans lequel le courant que l'on fait passer à travers la substance adsorbante est compris entre 0,05 et 1 A.

10. Procédé selon l'une quelconque des revendications précédentes, dans lequel une oxydation électrochimique de l'espèce précurseur désinfectante est mise en oeuvre par passage d'un courant électrique à travers une certaine quantité d'espèce précurseur désinfectante au sein de la chambre de régénération.

11. Procédé selon la revendication 10, dans lequel le courant que l'on fait passer à travers ladite quantité d'espèce précurseur désinfectante est compris entre 0,05 et 1 A.

12. Procédé selon la revendication 10, dans lequel le courant utilisé pour mettre en oeuvre une régénération de la substance adsorbante présente essentiellement la même amplitude que le courant utilisé pour oxyder l'espèce précurseur désinfectante.

13. Procédé selon l'une quelconque des revendications 10 à 12, dans lequel ladite quantité d'espèce précurseur désinfectante est admise dans la chambre de régénération en vue d'une oxydation électrochimique à une vitesse qui peut être commandée afin de générer l'espèce désinfectante à une vitesse souhaitée.

14. Procédé selon l'une quelconque des revendications précédentes, dans lequel la substance adsorbante comprend du graphite intercalé non expansé.
